# EUROPÄISCHE PATENTSCHRIFT

(11) **EP 0 476 172 B1**
(45) Veröffentlichungstag und Bekanntmachung des Hinweises auf die Patenterteilung: **20.10.1993**
(21) Anmeldenummer: 90118096.8
(22) Anmeldetag: 20.09.1990
(51) Int. Cl.: C01B 17/88, C01G 23/053, C22B 34/12

(54) **Verfahren zur Vorkonzentrierung der bei der Titandioxidherstellung nach dem Sulfatverfahren anfallenden Dünnsäure und Verwendung einer Vorrichtung für dieses Verfahren**
Process for preconcentrating diluted acid obtained during titanium dioxide preparation according to the sulphate process and use of apparatus for this process
Procédé pour la préconcentration d'acide dilué provenant de la préparation de dioxyde de titane par le procédé du sulfate et utilisation d'un dispositif pour ce procédé

(43) Veröffentlichungstag der Anmeldung: 25.03.1992
(73) Patentinhaber: KRONOS TITAN-Gesellschaft mbH, D-51307 Leverkusen (DE)
(72) Erfinder: Boehm, Ernst, Dipl.-Ing., W-4018 Langenfeld (DE); Dirichs, Peter, Dipl.-Ing.(FH), W-2890 Nordenham (DE); Hartmann, Achim, Dipl.-Ing., W-5024 Pulheim (DE); Schönherr, Dietrich, Dipl.-Ing., W-5068 Odenthal (DE)

(56) Entgegenhaltungen:
- EP-A- 0 097 259
- EP-A- 0 313 715
- FR-A- 2 441 418
- FR-A- 2 452 311
- GB-A- 1 119 236
- US-A- 3 789 902

## Beschreibung

Die Erfindung betrifft ein Verfahren zur Vorkonzentrierung der bei der Titandioxidherstellung nach dem Sulfatverfahren anfallenden Dünnsäure unter Ausnutzung der Wärme der bei der Calcinierung des Titandioxidhydrates anfallenden heißen Calcinierabgase, wobei Dünnsäure, die 20 bis 24 Gew. % H₂SO₄ enthält, in einen Säurekreislauf eingeführt wird, in diesem Säurekreislauf die umlaufende Säure mit heißen ungereinigten Calcinierabgasen in einem Venturiwäscher in direkten Kontakt gebracht wird, wobei die Calcinierabgase abgekühlt werden und der H₂SO₄-Gehalt der umlaufenden Säure erhöht wird, und ein Teil der umlaufenden Säure als vorkonzentrierte Säure in einer solchen Menge aus dem Säurekreislauf abgezogen wird, daß das Volumen der im Säurekreislauf umlaufenden Säure im wesentlichen konstant bleibt. Die Erfindung betrifft ferner die Verwendung einer Vorrichtung für dieses Verfahren.

Nach dem Verfahren zur Herstellung von Titandioxid durch Aufschluß von titanhaltigen Rohstoffen, z. B. Ilmenit, aus diesen Rohstoffen durch Anreicherung des Titans erhaltenen Ausgangsmaterialien, z. B. Titankonzentraten, und/oder titanhaltigen Schlacken mit Schwefelsäure, das auch als "Sulfatverfahren" bezeichnet wird, werden die in diesen Materialien enthaltenen Elemente bis auf geringe unlösliche Rückstände in entsprechende wasserlösliche Metallsulfate, hauptsächlich Sulfate des Titans und Eisens, umgewandelt. Das erhaltene Metallsulfatgemisch wird, wenn es nach dem Aufschluß nicht bereits in Lösung vorliegt, in Lösung gebracht, und aus der Lösung wird nach weiteren Arbeitsschritten durch hydrolytische Spaltung aus den in der Lösung befindlichen Sulfaten des Titans Titandioxidhydrat gefällt und aus der Lösung durch Filtration abgetrennt. Hierbei erhält man als Filtrat eine Lösung, die 20 bis 24 Gew. % H₂SO₄ sowie noch gelöste Metallsulfate enthält. Dieses Filtrat wird als "Dünnsäure" bezeichnet. Das Titandioxidhydrat wird durch Calcinieren in Titandioxid umgewandelt. Bei der Calcinierung entstehen Abgase. Diese Abgase werden weiter als "Calcinierabgase" bezeichnet.

Früher wurde die Dünnsäure als Abfall angesehen und zur Entsorgung in Gewässer eingebracht. Heute darf das aus Umweltschutzgründen nicht mehr durchgeführt werden. Überdies ist man bestrebt, die Schwefelsäure und Metallsulfate, die in der Dünnsäure enthalten sind, zurückzugewinnen und nutzbringend zu verwerten. Hierfür ist es in der Regel notwendig, die Dünnsäure zu konzentrieren. Dabei ist man bestrebt, bei der Konzentrierung der Dünnsäure einerseits möglichst wenig Energie einzusetzen und andererseits so zu arbeiten, daß es nicht zu Störungen durch die bei der Dünnsäurekonzentrierung ausfallenden Metallsulfate kommt.

Oft kann bereits die bei der Vorkonzentrierung erhaltene Säure bzw. das hierbei erhaltene Säure-Metallsulfatgemisch verwertet werden. Soll der Schwefelsäuregehalt der bei der Vorkonzentrierung erhaltenen Säure bzw. des bei der Vorkonzentrierung erhaltenen Säure-Metallsulfatgemisches weiter erhöht werden, dann werden an die Vorkonzentrierung weitere Schritte zur weiteren Konzentrierung und Abscheidung von Metallsulfaten angeschlossen.

Bei der Vorkonzentrierung der Dünnsäure ist man bestrebt, die Verwendung fremder Brennstoffe, so weit es geht, zu vermeiden und "Prozeßwärme" zu verwenden, d. h. Energie, die im Rahmen des Titandioxidherstellungsprozesses ohnehin anfällt. Für diesen Zweck bietet sich der Einsatz der heißen Calcinierabgase an, die bei der Calcinierung des Titandioxidhydrates anfallen.

In der EP-A1- 313 715 wird ein Verfahren beschrieben, das den direkten Einsatz ungereinigter Calcinierabgase bei der Vorkonzentrierung von Dünnsäure vorsieht. Hierbei wird die 20 bis 24 Gew. % H₂SO₄ enthaltende Dünnsäure im Kreislauf mit heißen ungereinigten Calcinierabgasen in einem direkten Gaskühler, z. B. einem Waschturm oder Venturiwäscher, in direkten Kontakt gebracht und auf eine Konzentration von 26 bis 29 Gew. % H₂SO₄ vorkonzentriert und die Konzentration der vorkonzentrierten Säure durch Zufuhr weiterer Dünnsäure und ungereinigter Calcinierabgase in den Kreislauf konstant gehalten. Gleichzeitig wird durch Entzug eines Teils der im Kreislauf geführten Säure ihr Volumen im wesentlichen konstant gehalten. Bei diesem Verfahren entsteht ein Rückstand, der im wesentlichen Titandioxid und Calciumsulfat enthält, wobei der Titandioxidbestandteil des Rückstandes überwiegend aus partiell geglühtem Titandioxid besteht, welches aus dem Flugstaub der Calcinierabgase stammt, und zum geringeren Teil aus Titandioxidhydrat, das von der Hydrolysestufe her in suspendierter Form in der Dünnsäure vorhanden war. Das Calciumsulfat stammt im wesentlichen aus den titanhaltigen Ausgangsstoffen.

Insbesondere die Auskristallisation von Calciumsulfat, aber auch die örtliche Kristallisation von Eisensulfaten kann wegen Bildung von Ablagerungen zu Schwierigkeiten bei der Wärmeausnutzung der heißen ungereinigten Calcinierabgase führen. Die vorliegende Erfindung geht nun von der Aufgabe aus, diese Schwierigkeiten zu überwinden.

Es wurde ein neues Verfahren zur Vorkonzentrierung der bei der Titandioxidherstellung nach dem Sulfatverfahren anfallenden Dünnsäure unter Ausnutzung der Wärme der bei der Calcinierung des Titandioxidhydrates anfallenden heißen Calcinierabgase gefunden, wobei
a) Dünnsäure, die 20 bis 24 Gew. % H₂SO₄ enthält, in einen Säurekreislauf eingeführt wird,
b) in diesem Säurekreislauf die umlaufende Säure mit heißen ungereinigten Calcinierabgasen in einem Venturiwäscher in direkten Kontakt gebracht wird, wobei die Calcinierabgase abgekühlt werden und der H₂SO₄-Gehalt der umlaufenden Säure erhöht wird, und
c) ein Teil der umlaufenden Säure als vorkonzentrierte Säure in einer solchen Menge aus dem Säurekreislauf abgezogen wird, daß das Volumen der im Säurekreislauf umlaufenden Säure im wesentlichen konstant bleibt. Das Verfahren ist dadurch gekennzeichnet, daß
d) der Kontakt der umlaufenden Säure mit den Calcinierabgasen in einem mit einem Aufsatz versehenen im wesentlichen vertikal angeordneten Venturiwäscher derart vorgenommen wird, daß
e) das heiße Calcinierabgas axial von oben nach unten durch ein in den Raum innerhalb des Aufsatzes hineinragendes Einführungsrohr in den Aufsatz eingeführt und dann durch den Venturiwäscher hindurchgeführt wird und die umlaufende Säure in zwei Anteilen derart in den Aufsatz und von da in den Venturiwäscher eingeführt wird, daß ein erster Anteil in gleicher Höhe wie das Calcinierabgas und im Gleichstrom damit in feinteiliger Form in den Raum innerhalb des Aufsatzes eingeführt und anschließend rasch mit dem Calcinierabgas vermischt wird und ein zweiter Anteil in Höhe der Einführung des ersten Anteils der umlaufenden Säure und des Calcinierabgases am gesamten Umfang über ein Wehr in den Aufsatz eingeführt und dann auf die Innenwand des Venturiwäschers aufgebracht, entlang dieser Innenwand zur Venturikehle geleitet und im wesentlichen erst im Bereich der Venturikehle mit dem Calcinierabgas vermischt wird, und daß
f) beide Anteile der umlaufenden Säure gemeinsam in einem unterhalb des Venturiwäschers angeordneten Fußgefäß aufgefangen und dort vom Calcinierabgas abgetrennt und die umlaufende Säure und das Calcinierabgas getrennt aus dem Fußgefäß abgezogen werden, wobei
g) so gearbeitet wird, daß im Säurekreislauf an der Stelle, an der ein Teil der umlaufenden Säure als vorkonzentrierte Säure abgezogen wird, ein H₂SO₄-Gehalt zwischen 25 und 28 Gew. % eingehalten wird.

Bei der Vermischung des axial in den Venturiwäscher eingeführten ersten Anteils der umlaufenden Säure mit den im Gleichstrom eingeführten heißen ungereinigten Calcinierabgasen findet unter Abkühlung der Calcinierabgase eine rasche, aber schonende Entfernung von Wasser aus dem Säurekreislauf und eine Erwärmung der Säure statt. Zwar sollte im Bereich der im Venturiwäscher herrschenden mittleren H₂SO₄-Konzentration der Säure (etwa 25 bis 28 Gew. %) aus thermodynamischen Gründen keine Ausfällung von Eisensulfaten stattfinden, jedoch läßt sich eine solche Ausfällung nicht ganz vermeiden, da es lokal zu einer so weitgehenden Wasserentfernung aus der Säure kommt, daß Metallsulfate, in der Hauptsache Eisen(II)-sulfat-Monohydrat, auskristallisieren, obwohl diese Metallsulfatausfällung durch eine möglichst feine Aufteilung des hier zugeführten Säureanteils und durch eine möglichst rasche Abkühlung des Calcinierabgases weitgehend herabgesetzt werden kann. Außerdem wird Calciumsulfat ausgeschieden. Wird die gesamte Menge der im Säurekreislauf umlaufenden Säure nur im Gleichstrom mit dem heißen ungereinigten Calcinierabgas in den Venturiwäscher eingeführt, dann bilden beide Substanzen zusammen mit dem aus dem ungereinigten Calcinierabgas stammenden TiO₂ feinteilige und harte schwer entfernbare Ablagerungen an den Wänden des Venturiwäschers. Es hat sich überraschenderweise herausgestellt, daß die Bildung dieser Ablagerungen dadurch vermieden wird, daß nur ein Anteil der im Säurekreislauf umlaufenden Säure axial im Gleichstrom mit dem heißen ungereinigten Calcinierabgas in den Venturiwäscher eingeführt wird und der Rest der im Säurekreislauf umlaufenden Säure in gleicher Höhe wie das Calcinierabgas und des eben genannten Anteils der im Säurekreislauf umlaufenden Säure über ein Wehr am gesamten Umfang so in den Raum oberhalb des Venturiwäschers aufgegeben wird, daß er von da entlang der Innenwand des Venturiwäschers zur Venturikehle geleitet und im wesentlichen erst im Bereich der Venturikehle in den Gasstrom aufgenommen wird, der dort wegen des verengten Querschnittes die stärkste Strömung aufweist. Es hat sich ferner überraschenderweise herausgestellt, daß bei der erfindungsgemäßen Verfahrensweise auch in dem Bereich des Venturiwäschers, der sich unterhalb der Venturikehle befindet, trotz der wieder schwächer werdenden Gasströmung und des Fehlens einer Flüssigkeitsschicht an der Wand keine Ablagerungen gebildet werden.

Führt man die umlaufende Säure nur über das Wehr entlang der Innenwand des oberen Teils des Venturiwäschers in diesen Venturiwäscher hinein, dann ist der Wärmeaustausch zwischen dem heißen Calcinierabgas und der umlaufenden Säure nicht ausreichend. Überdies bilden sich dann Ablagerungen im oberen Teil der Vorrichtung, die die Prozeßführung weiter beeinträchtigen. Auch wenn man zwar den ersten Anteil der umlaufenden Säure wie in der vorliegenden Erfindung, den zweiten Anteil aber nicht über ein Wehr, sondern auf andere Weise in den Venturiwäscher einführt, erhält man keine befriedigenden Ergebnisse.

Beide Säureanteile werden im Fußgefäß unterhalb des Venturiwäschers aufgefangen. In diesem Fußgefäß wird das Gas von der Säure abgetrennt; dabei werden die im Venturiwäscher ausgeschiedenen Feststoffe von der Säure aufgenommen; sie bleiben, sofern sie nicht wieder in Lösung gehen, in der Säure suspendiert oder setzen sich im Fußgefäß in loser Form ab und können deshalb leicht hier oder an einer anderen Stelle von der Säure abgetrennt werden. Die Calcinierabgase verlassen weitgehend befreit von Feststoffen, insbesondere auch von Titandioxid, sowie von Schwefeltrioxid, welches ebenfalls von der Säure aufgenommen wird, das Fußgefäß und können, gegebenenfalls nach einer Nachreinigung, die insbesondere zur Entfernung schwer entfernbarer gasförmiger Bestandteile, wie Schwefeldioxid, dient, und nachdem gegebenenfalls ihr verbliebener nutzbarer Wärmeinhalt, z. B. in Wärmeaustauschern, weiter verwertet worden ist, in die Atmosphäre entlassen werden.

Damit das erfindungsgemäße Verfahren gut funktioniert, ist es wichtig, daß der erste Anteil der umlaufenden Säure möglichst rasch und intensiv mit dem heißen ungereinigten Calcinierabgas vermischt wird. Dadurch wird das heiße Calcinierabgas durch diesen Säureanteil schlagartig abgekühlt und die unerwünschte Feststoffbildung weitgehend unterdrückt. Zu diesem Zweck sind verschiedene Maßnahmen erforderlich, die zusammenwirken müssen. Der erste Säureanteil muß in möglichst feinteiliger Form eingeführt werden. Die Einführung dieses Säureanteils erfolgt bevorzugt über Düsen. Weiterhin müssen sowohl das heiße Calcinierabgas als auch der erste Säureanteil in gleicher Höhe innerhalb des durch den Aufsatz oberhalb des Venturiwäschers gebildeten Raumes in diesen Raum eintreten. Zu diesem Zweck müssen die Zuführungen für das Calcinierabgas und den ersten Säureanteil in diesen Raum hineingezogen werden und innerhalb dieses Raumes in einer Ebene senkrecht zur Venturiachse münden. Außerdem ist es wichtig, daß die obere Kante des Wehrs, über das der zweite Anteil der umlaufenden Säure zugeführt wird, ebenfalls in dieser Ebene liegt. Werden die Zuführungen für das Calcinierabgas und den ersten Anteil der umlaufenden Säure nicht in den Raum hineingezogen und/oder liegt die Kante des Wehrs oberhalb oder unterhalb der genannten Ebene, dann wird die Bildung von Ansätzen nicht ausreichend unterbunden. Die Zuführung des ersten Anteils der umlaufenden Säure verläuft koaxial und innerhalb der Zuführung des heißen Calcinierabgases.

Der Säurefluß im Kreislauf ist sowohl im Hinblick auf den H₂SO₄-Gehalt der umlaufenden Säure als auch im Hinblick auf die Menge der durchgesetzten Säure zeitlich im wesentlichen konstant. Dabei sind in der Technik übliche Schwankungen von ± 20 % nicht ausgeschlossen. Es hat sich gemäß einer Ausführungsform der Erfindung als besonders vorteilhaft erwiesen, daß so gearbeitet wird, daß der Säurekreislauf mittels einer Pumpvorrichtung aufrechterhalten wird und die Einführung der Dünnsäure auf der Saugseite dieser Pumpvorrichtung und der Abzug von umlaufender Säure als vorkonzentrierte Säure aus dem Säurekreislauf auf der Druckseite dieser Pumpvorrichtung vorgenommen wird. Durch die Zuführung der noch nicht vorkonzentrierten Dünnsäure an der Saugseite der Pumpvorrichtung wird sichergestellt, daß die Dünnsäure insbesondere innerhalb der Pumpvorrichtung gleichmäßig mit der umlaufenden Säure vermischt wird, bevor die umlaufende Säure in den Venturiwäscher gelangt.

Die im Säurekreislauf umlaufende Säure muß mit einer solchen Geschwindigkeit im Kreislauf geführt werden, daß im Venturiwäscher eine ausreichende Berieselungsdichte gewährleistet ist. Die Wirksamkeit der Abkühlung der heißen Calcinierabgase hängt dabei von der Menge des im Venturiwäscher verdampften Wassers ab, welche wiederum von der Menge der in einer bestimmten Zeit in den Säurekreislauf eingeführten Dünnsäure abhängt. Um eine gleichmäßige Wasserverdampfung aus der Säure zu gewährleisten, sollte, bezogen auf die Zeit, die Menge der im Kreislauf umlaufenden und damit durch den Venturiwäscher hindurchgeschickten Säure die Menge der in den Säurekreislauf eingeführten Dünnsäure in der Regel beträchtlich übersteigen.

In der Regel ist es besonders vorteilhaft, wenn nach einer Ausführungsform der Erfindung ein Gewichtsverhältnis von in einer bestimmten Zeit im Säurekreislauf umlaufender Säure zu in der gleichen Zeit in den Säurekreislauf eingeführter Dünnsäure von 10 bis 15 eingestellt wird.

Die Menge des Wassers, das aus der umlaufenden Säure im Venturiwäscher entfernt werden muß, hängt von der Differenz der H₂SO₄-Gehalte von Dünnsäure und vorkonzentrierter Säure ab. Je größer diese Differenz ist, desto mehr Wasser muß durch die heißen Calcinierabgase aus der umlaufenden Säure entfernt werden, was entweder durch eine Erhöhung der Temperatur und/oder der Menge des eingeführten ungereinigten Calcinierabgases oder durch eine Herabsetzung des Säuredurchsatzes durch den Venturiwäscher erfolgen kann. Hierbei dürfen bestimmte Grenzen nicht überschritten werden, wenn man wirtschaftlich arbeiten will. So kann der Säuredurchsatz durch den Venturiwäscher nicht beliebig herabgesetzt werden, weil dann die Berieselungsdichte im Venturiwäscher zu gering wird. Die Temperatur der eingesetzten ungereinigten Calcinierabgase darf andererseits nicht zu hoch sein. Wenn die Calcinierabgase mit einer zu hohen Temperatur in den Venturiwäscher eingeführt werden, dann können Störungen durch eine zu starke Bildung von Feststoffen wegen einer übermäßigen lokalen Erhitzung der Säure auftreten. Die Menge der Calcinierabgase ist im allgemeinen weitgehend vorgegeben.

Die heißen ungereinigten Calcinierabgase werden im allgemeinen direkt vom Ofen aus, in dem das Titandioxidhydrat calciniert wird, dem Venturiwäscher zugeführt. In diesem Fall werden zweckmäßigerweise die Bedingungen für die im Kreislauf umlaufende Säure und für die Menge der in den Säurekreislauf eingeführten Dünnsäure den zur Verfügung stehenden Calcinierabgasen angepaßt.

Eine vorteilhafte Ausführungsform der Erfindung ist dadurch gekennzeichnet, daß die Calcinierabgase mit einer Temperatur zwischen 250 und 400 °C in den Venturiwäscher eingeführt und mit einer Temperatur zwischen 85 und 100 °c aus dem Venturiwäscher abgezogen werden.

Unter diesen Bedingungen erhält man in der Regel eine vorkonzentrierte Säure, die mit einer Temperatur von 75 bis 90 °C aus dem Säurekreislauf abgezogen wird.

Für eine gute Wirksamkeit des Venturiwäschers müssen die Mengen der beiden ihm zugeführten Anteile der umlaufenden Säure aufeinander abgestimmt werden. Je größer die Gefahr ist, daß im Venturiwäscher lokale Überhitzungen auftreten und/oder je höher der Metallsalzgehalt der umlaufenden Säure ist (beides führt zu vermehrter Bildung von Feststoffen), desto größer soll die Menge des zweiten Säureanteils sein, der im oberen Bereich des Venturiwäschers auf seine Innenwand aufgebracht und entlang dieser Innenwand zur Venturikehle geführt und erst im Bereich der Venturikehle mit dem Calcinierabgas vermischt wird. Diese Menge ist allerdings nach oben durch die Forderung begrenzt, diesen Säureanteil im Bereich der Venturikehle möglichst vollständig mit dem Calcinierabgas zu vermischen. Es ist in der Regel vorteilhaft, nach einer Ausführungsform der Erfindung so zu verfahren, daß die beiden Anteile der umlaufenden Säure in einem solchen Mengenverhältnis in den Venturiwäscher eingeführt werden, daß die Menge des ersten axial in den Venturiwäscher eingeführten Anteils das 0,6- bis 1-fache der Menge des zweiten über das Wehr auf die Innenwand des Venturiwäschers aufgebrachten Anteils beträgt.

Nach einer vorteilhaften Ausführungsform der Erfindung wird der zweite Anteil der umlaufenden Säure mit einer tangentialen Komponente über das Wehr auf die Innenwand des Venturiwäschers aufgebracht. Dadurch wird die Strömung der Säure entlang der Wand des Venturiwäschers stabilisiert und ihre schützende Wirkung gegen die Bildung von Ablagerungen verstärkt.

Die Kontaktzeit zwischen dem Calcinierabgas und der Säure im Venturiwäscher ist sehr kurz und liegt im allgemeinen unter einer Sekunde. Im allgemeinen ist es günstig, wenn nach einer Ausführungsform der Erfindung das Calcinierabgas derart durch den Venturiwäscher hindurchgeführt wird, daß die mittlere Verweilzeit des Calcinierabgases im Venturiwäscher oberhalb der Venturikehle 0,2 bis 0,4 Sekunden und unterhalb der Venturikehle 0,3 bis 0,5 Sekunden beträgt.

Alle angeführten Parameter müssen aufeinander abgestimmt werden und können in besonderen Fällen auch außerhalb der als vorteilhaft angeführten Grenzen liegen. Der Fachmann kann im Einzelfall aufgrund der oben gegebenen Hinweise leicht durch nichterfinderische Versuche die jeweils günstigsten Bedingungen für die Durchführung des erfindungsgemäßen Verfahrens ermitteln.

Die gemäß der vorliegenden Erfindung erhaltene vorkonzentrierte Säure kann direkt weiter verwendet, z. B. wieder in den Titandioxidherstellungsprozeß zurückgeführt oder anderen Verwendungszwecken zugeführt werden, beispielsweise direkt im Rahmen der Eisensulfatabröstung eingesetzt werden. Sie kann aber auch weiter konzentriert und gewünschtenfalls von Metallsalzen befreit werden, bevor sie verschiedenen Verwendungszwecken zugeführt oder verwertet wird.

Ein wichtiges Einsatzgebiet der Erfindung ist die Aufarbeitung der Dünnsäure unter Gewinnung der in ihr enthaltenen Bestandteile, insbesondere Schwefelsäure und Eisensulfat, und die Rückführung der hierbei erhaltenen und auf eine geeignete Konzentration gebrachten Schwefelsäure in den Titandioxidherstellungsprozeß. Ein solcher Prozeß, bei dem die Erfindung bei der Vorkonzentrierung der Dünnsäure mit Vorteil eingesetzt werden kann, ist in der EP-A1- 313 715 beschrieben.

Bei diesem Prozeß wird
a) Dünnsäure, enthaltend 20 bis 24 Gew. % H₂SO₄, im Kreislauf mit heißen ungereinigten Calcinierabgasen in direkten Kontakt gebracht und auf eine Konzentration von 25 bis 28 Gew. % H₂SO₄ vorkonzentriert und die Konzentration dieser Säure durch Zufuhr weiterer Dünnsäure und ungereinigter Calcinierabgase in den Kreislauf konstant gehalten, wobei ein Rückstand entsteht, der im wesentlichen Titandioxid und Calciumsulfat enthält,
b) die vorkonzentrierte Säure von dem Rückstand abgetrennt und der Rückstand mit Wasser gewaschen,
c) der gewaschene Rückstand in den Prozeß der Titandioxidherstellung zurückgeführt,
d) die von dem Rückstand abgetrennte vorkonzentrierte Säure auf einen Gehalt von 60 bis 71 Gew. % H₂SO₄, bezogen auf den Flüssiganteil, aufkonzentriert, wobei Metallsulfate ausfallen, und
e) die auf 60 bis 71 Gew. % H₂SO₄ aufkonzentrierte Säure von den ausgefallenen Metallsulfaten abgetrennt und in den Aufschluß titanhaltiger Rohstoffe zurückgeführt.

Gegebenenfalls kann, insbesondere beim Vorliegen relativ eisenreicher, z. B. aus Ilmenit stammender, Dünnsäuren, die vom Rückstand abgetrennte vorkonzentrierte Säure auf 10 bis 25 °C abgekühlt werden, wobei ein Gemisch kristallwasserhaltiger Metallsulfate ausfällt und abgetrennt wird, das im wesentlichen aus Eisen(II)-sulfat-Heptahydrat besteht und in der Technik als "Grünsalz" bezeichnet wird. Bei diesem Schritt steigt der Gehalt der Säure auf 30 bis 35 Gew. % H₂SO₄ an. Diese 30 bis 35 Gew. % H₂SO₄ enthaltende Säure wird dann weiter aufkonzentriert.

Im einzelnen kann die weitere Verarbeitung der erfindungsgemäß im Venturiwäscher vorkonzentrierten Säure in der in der EP-A1- 313 715 beschriebenen Weise, wie sie beispielsweise in den Ansprüchen 3 bis 15 dieser Druckschrift zum Ausdruck kommt, auf deren Offenbarung hiermit Bezug genommen wird, vorgenommen werden. Oft ist es vorteilhaft, die auf 60 bis 71 Gew. % H₂SO₄, bezogen auf den Flüssiganteil, aufkonzentrierte, ausgefallene Metallsulfate enthaltende, Säure vor Abtrennung dieser Sulfate in einer Kühlvorrichtung zu kühlen und die gekühlte Suspension anschließend ohne weitere Kühlung in einer mehrstufigen Rührkaskade zu reifen. Die Abtrennung der Metallsulfate aus der aufkonzentrierten Suspension kann beispielsweise in einer Membranfilterpresse erfolgen, wobei beispielsweise so verfahren werden kann, daß man die vorkonzentrierte Schwefelsäurelösung unter Bildung einer Metallsulfat-Schwefelsäure-Suspension bis zu einem Gehalt von 40 bis 85 Gew. % H₂SO₄, bezogen auf den Flüssiganteil, konzentriert und danach die in der Suspension vorhandenen ausgefallenen Metallsulfate derart abtrennt, daß die Abtrennung durch Filtration unter Überdruck in einer Membranfilterpresse erfolgt und der dabei gebildete Filterkuchen einer Waschbehandlung unterzogen wird, wobei als Waschflüssigkeit eine gegebenenfalls Metallsulfate gelöst enthaltende 30 bis 35 Gew. % H₂SO₄ enthaltende Schwefelsäurelösung eingesetzt wird. Hierbei kann die Filtration aus einem ersten Schritt bestehen, in dem der Filterkuchen aufgebaut wird, und aus einem zweiten Schritt, in dem der Filterkuchen ausgepreßt wird. Ferner kann der gewaschene Filterkuchen, gegebenenfalls nach Auspressen, mit Druckluft durchblasen werden.

Diese Verfahrensweise ist in der EP-A1- 362 428 beschrieben, auf deren Offenlegung hiermit Bezug genommen wird.

Die Erfindung betrifft auch die Verwendung einer bestimmten Vorrichtung für das Inkontaktbringen einer Säure mit einem heißen Gas, bestehend aus
a) einem im wesentlichen senkrecht angeordneten Venturiwäscher mit einem oberen von oben nach unten sich verjüngenden Teil, einem unteren sich von oben nach unten erweiternden Teil und einer diese beiden Teile verbindenden Venturikehle,
b) einem koaxial oberhalb des oberen Teils des Venturiwäschers angeordneten Aufsatz, wobei dessen Innenraum mit dem Innenraum des oberen Teils des Venturiwäschers in offener Verbindung steht und wobei in den Innenraum des Aufsatzes koaxial von oben ein Einführungsrohr für ein heißes Gas hineinragt und in ihm mündet und innerhalb dieses Einführungsrohres - in Richtung der Achse des Venturiwäschers gesehen - in gleicher Höhe wie dieses Einführungsrohr ein Mittel für die Einführung eines ersten Anteils von Säure in feinteiliger Form in das heiße Gas mündet und wobei im Innenraum des Aufsatzes außerdem entlang des gesamten Umfangs ein Wehr so angeordnet ist, daß es unmittelbar auf der oberen Kante der Innenwand des oberen Teils des Venturiwäschers aufsitzt und an seiner Innenwand mit ihr fluchtet, wobei die obere Kante des Wehrs - in Richtung der Achse des Venturiwäschers gesehen - in gleicher Höhe wie die Einmündungen des Einführungsrohres für heißes Gas und des Mittels für die Einführung des ersten Anteils an Säure verläuft, wobei das Wehr mit der Umfangswand des Aufsatzes einen Ringraum bildet, in den durch diese Umfangswand eine/mehrere Zuführung(en) für einen zweiten Anteil von Säure mündet bzw. münden, wobei außerdem das Mittel für die Einführung des ersten Anteils von Säure und die Zuführung(en) für den zweiten Anteil von Säure getrennt regelbar sind, ferner bestehend aus
c) einem Fußgefäß, welches unterhalb des unteren Teils des Venturiwäschers angeordnet ist, wobei der Innenraum des Fußgefäßes mit dem Innenraum des unteren Teils des Venturiwäschers in offener Verbindung steht, wobei das Fußgefäß mit getrennten Auslässen für Gas und für die Säure, die mit dem heißen Gas in Kontakt gebracht worden war, versehen ist, sowie bestehend aus
d) einer/mehreren Umlaufleitungen, die den Auslaß bzw. die Auslässe für die Säure, die mit dem heißen Gas in Kontakt gebracht worden war, mit dem Mittel für die Einführung des ersten Anteils von Säure und der/den Zuführung(en) für den zweiten Anteil von Säure verbindet bzw. verbinden und mit einem Einlaß oder mehreren Einlässen für frisch von außen zugeführte Säure und einem Auslaß bzw. mehreren Auslässen für Säure, die mit dem heißen Gas in Kontakt gebracht worden war, versehen ist bzw. sind,

zur Vorkonzentrierung der bei der Titandioxidherstellung nach dem Sulfatverfahren anfallenden 20 bis 24 Gew. % H₂SO₄ enthaltenden Dünnsäure auf einen H₂SO₄-Gehalt von 25 bis 28 Gew. % unter Ausnutzung der Wärme der bei der Calcinierung des Titandioxidhydrats anfallenden heißen ungereinigten Calcinierabgase, wobei diese heißen ungereinigten Calcinierabgase in direkten Kontakt mit der in einem Säurekreislauf umlaufenden Säure gebracht und dabei abgekühlt werden und in diesen Säurekreislauf Dünnsäure eingeführt und aus dem Säurekreislauf ein Teil der umlaufenden Säure als vorkonzentrierte Säure abgezogen wird.

Besondere Vorteile bietet oft die Verwendung einer wie oben beschriebenen Vorrichtung, bei der in der Umlaufleitung bzw. den Umlaufleitungen eine/mehrere Pumpvorrichtung(en) angeordnet ist/sind und mindestens ein Einlaß saugseitig zur jeweiligen Pumpvorrichtung und mindestens ein Auslaß druckseitig zur jeweiligen Pumpvorrichtung angeordnet ist, wobei Dünnsäure durch den Einlaß bzw. die Einlässe in die Umlaufleitung(en) eingeführt und ein Teil der umlaufenden Säure als vorkonzentrierte Säure aus dem Auslaß bzw. den Auslässen aus der Umlaufleitung bzw. den Umlaufleitungen abgezogen wird.

Vorteilhaft ist oft die Verwendung einer Vorrichtung, bei der das Fußgefäß als Absetzbehälter und/oder Lösebehälter ausgestaltet und mit einer Deckplatte versehen ist, durch die der untere Teil des Venturiwäschers in das Fußgefäß mündet, wobei die Deckplatte ferner außerhalb der Einmündung des unteren Teils des Venturiwäschers in das Fußgefäß mit einem im wesentlichen nach oben gerichteten Auslaß für Gas versehen ist, durch den das abgekühlte und von der umlaufenden Säure abgetrennte Calcinierabgas abgezogen wird, und wobei ferner das Fußgefäß außerhalb der Deckplatte mit einem Auslaß oder mehreren Auslässen für die Säure, die mit dem heißen Gas in Kontakt gebracht worden war, versehen ist, durch den bzw. die die vom Calcinierabgas abgetrennte umlaufende Säure aus dem Fußgefäß abgezogen wird, sowie gegebenenfalls mit mindestens einem weiteren Auslaß versehen ist, durch den gegebenenfalls nicht in der umlaufenden Säure in Lösung gegangene Rückstände aus dem Fußgefäß entfernt werden.

Im Fußgefäß können zusätzliche Umlenkeinrichtungen für den Calcinierabgasstrom vorgesehen sein. Durch diese Umlenkeinrichtungen kann die Wirksamkeit der Abtrennung des Calcinierabgases von der Säure erhöht werden.

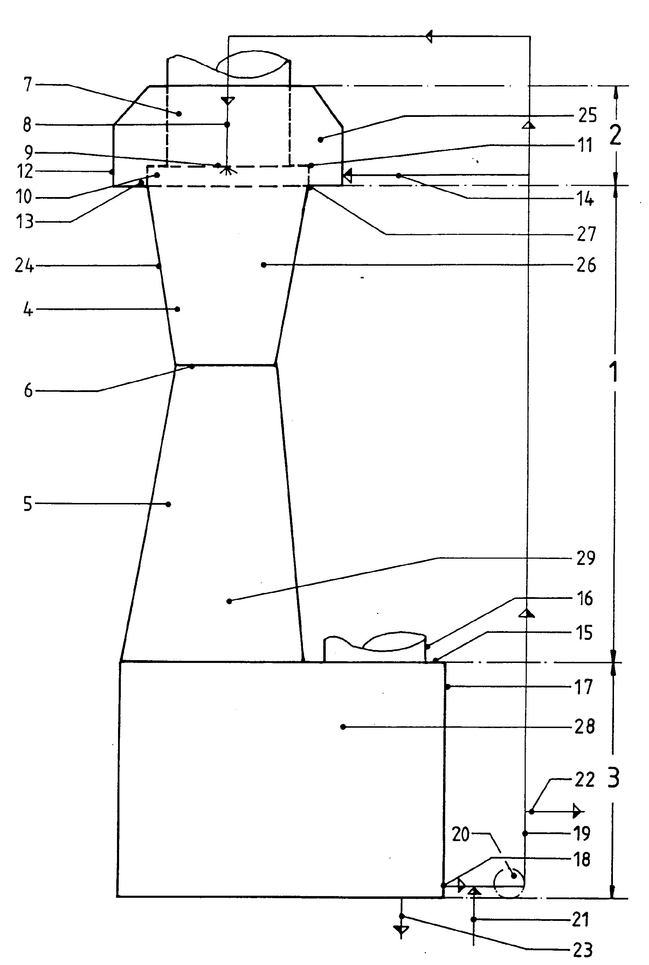

In der Abbildung wird eine beispielhafte Ausführungsform der erfindungsgemäß verwendeten Vorrichtung gezeigt, ohne daß die Erfindung auf die Verwendung der hier gezeigten Vorrichtung im Rahmen des erfindungsgemäßen Verfahrens beschränkt sein soll.

Die Vorrichtung besteht aus einem Venturiwäscher 1, einem koaxial oberhalb des Venturiwäschers 1 angeordneten Aufsatz 2 und einem unterhalb des Venturiwäschers 1 angeordneten Fußgefäß 3. Der Venturiwäscher 1 weist einen oberen von oben nach unten sich konisch verengenden Teil 4 und einen unteren von oben nach unten sich konisch erweiternden Teil 5 auf, wobei beide Teile durch die Venturikehle 6 miteinander verbunden sind.

In den Aufsatz 2 ragt von oben axial ein Einführungsrohr 7 für das heiße ungereinigte Calcinierabgas. Innerhalb des Einführungsrohres 7 ist koaxial als Mittel für die Einführung eines ersten Anteils von Säure eine Zuleitung 8 angeordnet, die in gleicher Höhe wie das Einführungsrohr 7 in einer Düse 9 innerhalb des Aufsatzes 2 endet. Ferner ist im Aufsatz 2 an der Stelle, an der sich der obere Teil des Venturiwäschers 1 anschließt, und mit der Innenwand 24 des oberen Teils 4 des Venturiwäschers 1 fluchtend entlang des gesamten Umfangs ein Wehr 10 angeordnet, dessen obere Kante 11 in gleicher Höhe wie die Einmündungen des Einführungsrohres 7 und der Zuleitung 8 endet, so daß diese Einmündungen und die obere Kante 11 auf einer senkrecht zur Achse des Ventriwäschers 1 verlaufende Ebene liegen. Das Wehr 10 bildet mit der Umfangswand 12 des Aufsatzes 2 einen Ringraum 13, in den durch die Umfangswand 12 des Aufsatzes 2 eine Zuführung 14 für einen zweiten Anteil der Säure in einer Höhe einmündet, die unterhalb der oberen Kante 11 des Wehrs 10 liegt.

Das Fußgefäß 3 ist als ein leerer Behälter ausgebildet, der mit einer Deckplatte 15 versehen ist. Durch die Deckplatte 15 mündet an einer Stelle von oben der untere Teil 5 des Venturiwäschers 1 in das Fußgefäß 3. An einer anderen Stelle ist die Deckplatte 15 mit einem Auslaß 16 für Calcinierabgas versehen.

Von der Seitenwand 17 des Fußgefäßes 3 geht über einen Auslaß 18 eine Umlaufleitung 19 für Säure ab, die mit einer Pumpvorrichtung (Umlaufpumpe) 20 versehen ist und mit der Zuleitung 8 und der Zuführung 14 für den ersten und zweiten Anteil von Säure verbunden ist. Zwischen dem Fußgefäß 3 und der Pumpvorrichtung 20 befindet sich saugseitig der Pumpvorrichtung 20 ein Einlaß 21 für Dünnsäure in die Umlaufleitung 19, und zwischen der Pumpvorrichtung 20 und der Zuführung 14 für den zweiten Anteil von Säure ist in der Umlaufleitung 19 druckseitig der Pumpvorrichtung 20 ein Auslaß 22 zum Ausschleusen von umlaufender Säure als vorkonzentrierte Säure angeordnet. Am Boden des Fußgefäßes 3 ist noch ein Auslaß 23 zum Ausschleusen von abgesetzten nicht gelösten Feststoffen angeordnet.

Die Zuleitung 8 und die Zuführung 14 sind durch (nicht gezeigte) Ventile getrennt voneinander regelbar.

Der Venturiwäscher 1 ist innen korrosionsfest ausgemauert. Auch die übrigen Teile der Vorrichtung bestehen aus korrosionsfestem Material oder sind innen mit einem entsprechenden Überzug versehen.

Das erfindungsgemäße Verfahren wird mittels der in der Abbildung gezeigten Vorrichtung folgendermaßen durchgeführt:

Beim Anfahren wird mittels der Pumpvorrichtung 20 eine Säure, deren H₂SO₄-Konzentration niedriger oder gleich der nach der Aufkonzentrierung gewünschten H₂SO₄-Konzentration ist, durch die Umlaufleitung 19, die Zuleitung 8 und die Zuführung 14, den Aufsatz 2, den Venturiwäscher 1 und das Fußgefäß 3 im Kreislauf gefahren. Dann wird heißes ungereinigtes Calcinierabgas durch das Einführungsrohr 7 in den Aufsatz 2 eingeführt; in das heiße Calcinierabgas wird durch die an der Zuleitung 8 befindliche Düse 9 kontinuierlich ein erster Anteil der umlaufenden Säure eingesprüht. Sofern die H₂SO₄-Konzentration der umlaufenden Säure niedriger als die nach der Aufkonzentrierung gewünschte H₂SO₄-Konzentraton ist, wird zunächst durch Verdampfen von Wasser die H₂SO₄-Konzentration der umlaufenden Säure angehoben, bis die gewünschte H₂SO₄-Konzentration erreicht ist. Wenn die umlaufende Säure die gewünschte H₂SO₄-Konzentration aufweist, wird durch den Auslaß 22 ein Teil der umlaufenden Säure aus dem Kreislauf als vorkonzentrierte Säure abgezogen und durch den Einlaß 21 eine Dünnsäure mit gleicher Volumenmenge wie die Volumenmenge der abgezogenen Säure in den Säurekreislauf eingespeist, wobei in Abstimmung mit der vom Calcinierabgas zur Verfügung gestellten Wärme die Menge der abgezogenen und der eingespeisten Säure so bemessen wird, daß die H₂SO₄-Konzentration in der umlaufenden Säure im Verlauf der weiteren Durchführung des Verfahrens im wesentlichen konstant bleibt. Das aus dem ersten Säureanteil und dem heißen Calcinierabgas gebildete Gemisch strömt durch den Venturiwäscher 1 und gelangt von dort in das Fußgefäß 3. Der durch die Zuführung 14 zugeführte zweite Anteil der umlaufenden Säure füllt den Ringraum 13, fließt über die obere Kante 11 des Wehrs 10 entlang der inneren Wand dieses Wehrs und von da in den oberen Teil 4 des Venturiwäschers 1 und fließt entlang von dessen Innenwand 24 auf die Venturikehle 6 zu, wobei diese Innenwand 24 von diesem zweiten Säureanteil berieselt und gekühlt wird. Im Bereich der Venturikehle 6 wird dieser zweite Säureanteil vom Gasstrom aufgenommen. Beim Durchgang durch den Venturiwäscher 1 wird das heiße Calcinierabgas abgekühlt und die Säure erwärmt und konzentriert. Im Fußgefäß 3 wird die erwärmte Säure vom abgekühlten Calcinierabgas abgetrennt, welches durch den Auslaß 16 das Fußgefäß 3 verläßt, während die Säure über die Umlaufleitung 19 unter Zugabe erneuter Dünnsäuremengen und unter Abzug eines entsprechenden Teils der umlaufenden Säure als vorkonzentrierte Säure erneut umgepumpt wird.

Feststoffe, die im Venturiwäscher 1 bei der Vermischung der Säure mit dem heißen Calcinierabgas gebildet wurden, werden größtenteils im Fußgefäß 3 wieder gelöst. Ein ungelöster Anteil, der im wesentlichen aus Calciumsulfat sowie aus Titandioxid besteht, welches überwiegend aus dem ungereinigten Calcinierabgas durch die Säure ausgewaschen wird, wird mit dem Säurestrom mitgerissen. Durch die ständige Ausschleusung von umlaufender Säure als aufkonzentrierte Säure einschließlich der mitgerissenen Feststoffe durch den Auslaß 22 wird das Niveau der Feststoffbelastung in der umlaufenden Säure konstant gehalten. Wenn die Feststoffbelastung in der umlaufenden Säure zu hoch ist und herabgesetzt werden soll, werden diese Feststoffe im unteren Teil des Fußgefäßes 3, gegebenenfalls in Absetzeinrichtungen, angereichert und durch den Auslaß 23 entfernt.

Die Zuführung 14 für den zweiten Säureanteil kann so angeordnet sein, daß ihre Achse in einem Winkel gegenüber der radialen Richtung abweicht. Durch diese Anordnung wird dem zweiten Anteil der umlaufenden Säure bei ihrer Zuführung in den Ringraum 13 eine tangentiale Bewegungskomponente verliehen, so daß er auch mit einer tangentialen Komponente über das Wehr 10 auf die Innenwand 24 des oberen Teils 4 des Venturiwäschers 1 gelangt.

Durch folgende Beispiele soll die Erfindung näher erläutert werden:

### Beispiel 1

Es wurde eine Vorrichtung der in der Abbildung dargestellten Art verwendet. Die inneren Volumina des Venturiwäschers 1 und des Aufsatzes 2 betrugen zusammen 8,5 m³.

Im Säurekreislauf wurde eine vorkonzentrierte Säure mit einem H₂SO₄-Gehalt von 27 Gew. % in einer Menge von 225 t/h umgepumpt. Von dieser Menge wurden 85 t/h als erster Säureanteil durch die Zuleitung 8 und 140 t/h als zweiter Säureanteil durch die Zuführung 14 in den Venturiwäscher 1 eingeführt.

Durch das Einführungsrohr 7 wurden als Calcinierabgas Vₙ=25 000 m³/h (feucht) eines ungereinigten Ofenabgases aus einem Drehofen der TiO₂-Herstellung nach dem Sulfatverfahren mit einer Temperatur von 350 °C in den Venturiwäscher 1 eingeführt und zunächst mit dem ersten Anteil der Säure und dann im Bereich der Venturikehle 6 mit dem zweiten Anteil der Säure vermischt. Durch den Auslaß 16 wurden Vₙ= 28 300 m³/h (feucht) Calcinierabgas mit einer Temperatur von 90 °C abgezogen. Durch den Auslaß 22 wurden kontinuierlich 11,4 t/h Säure als vorkonzentrierte Säure mit einem H₂SO₄-Gehalt von 27 Gew. % und einer Temperatur von 90 °C abgezogen, und durch den Einlaß 21 wurden kontinuierlich 14 t/h Dünnsäure mit einem Gehalt von 22 Gew. % H₂SO₄, 10,5 Gew. % FeSO₄ und 3 Gew. % MgSO₄ sowie verschiedenen anderen in untergeordneten Mengen vorhandenen Verunreinigungen mit einer Temperatur von 40 °C zugeführt. Aus der Dünnsäure wurden 2,6 t/h Wasser verdampft und aus dem Calcinierabgas 8,4 GJ/h an Wärme zurückgewonnen.

Die Gasgeschwindigkeiten betrugen im oberen Teil 4 des Venturiwäschers 15 bis 25 m/h, und die mittlere Gasverweilzeit betrug in diesem Abschnitt 0,2 bis 0,4 Sekunden. Im unteren Teil 5 des Venturiwäschers 1 betrugen die Gasgeschwindigkeiten 40 bis 4 m/s, und die mittlere Verweilzeit betrug dort 0,3 bis 0,5 Sekunden.

Der Betrieb lief kontinuierlich über Monate störungsfrei.

### Beispiel 2 (Gegenbeispiel)

Es wurde wie in Beispiel 1 gearbeitet, jedoch wurde die gesamte Menge der umlaufenden Säure durch die Zuleitung 8 von oben in die Vorrichtung hineingegeben. Eine Berieselung und Kühlung der Innenwand 24 des oberen Teils 4 des Venturiwäschers 1 fand nicht statt. Der Versuch mußte nach 10 Stunden abgebrochen werden, da die Innenwand 24 des oberen Teils 4 des Venturiwäschers 1 mit starken Ablagerungen, die im wesentlichen aus Eisen(II)-sulfat-Monohydrat bestanden, bedeckt war und die Venturikehle 6 weitgehend durch Ablagerungen verstopft war.

### Beispiel 3 (Gegenbeispiel)

Die gesamte Menge der umlaufenden Säure wurde anstatt durch die Zuleitung 8 durch die Zuführung 14 über das Wehr 10 in den Venturiwäscher gegeben. Die sonstigen Bedingungen waren unverändert. Die Gasaustrittstemperatur lag bei 140 °C, und durch den Auslaß 22 wurden 12,1 t/h Säure als vorkonzentrierte Säure mit einem H₂SO₄-Gehalt von 25,5 Gew. % aus dem Säurekreislauf abgezogen. Der Wärmeinhalt des heißen Calcinierabgases wurde damit weniger ausgenützt, und die Vorkonzentrierung der Dünnsäure erfolgte in einem geringeren Ausmaß als in den anderen Beispielen. Überdies mußte der Versuch nach 4 Tagen abgebrochen werden, da die Prozeßführung durch starke Ablagerungen im Bereich zwischen dem Wehr 10 und dem Einführungsrohr 7 gestört wurde.

Die Beispiele zeigen, daß es mit dem erfindungsgemäßen Verfahren und der hierfür verwendeten Vorrichtung gelingt, unter Ausnutzung der Wärme der ungereinigten Calcinierabgase durch den direkten Einsatz dieser ungereinigten Calcinierabgase über Monate hinweg in einfacher Weise eine kontinuierliche Vorkonzentrierung der Dünnsäure ohne Ausfallzeiten vorzunehmen und damit eine gleichmäßige und sichere Titandioxiderzeugung unter Schonung der Umwelt zu gewährleisten.

Die Erfindung betrifft ein Verfahren zur Vorkonzentrierung der bei der Titandioxidherstellung nach dem Sulfatverfahren anfallenden Dünnsäure und die Verwendung einer Vorrichtung für dieses Verfahren. Hierbei wird die Wärme der bei der Calcinierung des Titandioxidhydrates anfallenden heißen ungereinigten Calcinierabgase ausgenutzt, wobei Dünnsäure in einen Säurekreislauf eingebracht, die umlaufende Säure mit den Calcinierabgasen in einem Venturiwäscher in direkten Kontakt gebracht und ein Teil der umlaufenden Säure als vorkonzentrierte Säure aus dem Säurekreislauf abgezogen wird. Ein Teil der umlaufenden Säure wird am oberen Ende des Venturiwäschers rasch mit den Calcinierabgasen vermischt, ein zweiter Teil in gleicher Höhe über ein Wehr auf die Innenwand des Venturiwäschers aufgebracht und im Venturihals mit den Calcinierabgasen vermischt. Unterhalb des Venturiwäschers wird das Calcinierabgas von der Säure abgetrennt. Die Säure wird von 20 bis 24 % H₂SO₄ auf 25 bis 28 % H₂SO₄ vorkonzentriert und das Calcinierabgas vorzugsweise von 250 bis 400 °C auf 85 bis 100 °C abgekühlt.

## Patentansprüche

1. Verfahren zur Vorkonzentrierung der bei der Titandioxidherstellung nach dem Sulfatverfahren anfallenden Dünnsäure unter Ausnutzung der Wärme der bei der Calcinierung des Titandioxidhydrates anfallenden heißen Calcinierabgase, wobei
a) Dünnsäure, die 20 bis 24 Gew. % H₂SO₄ enthält, in einen Säurekreislauf eingeführt wird,
b) in diesem Säurekreislauf die umlaufende Säure mit heißen ungereinigten Calcinierabgasen in einem Venturiwäscher in direkten Kontakt gebracht wird, wobei die Calcinierabgase abgekühlt werden und der H₂SO₄-Gehalt der umlaufenden Säure erhöht wird, und
c) ein Teil der umlaufenden Säure als vorkonzentrierte Säure in einer solchen Menge aus dem Säurekreislauf abgezogen wird, daß das Volumen der im Säurekreislauf umlaufenden Säure im wesentlichen konstant bleibt,
dadurch gekennzeichnet, daß
d) der Kontakt der umlaufenden Säure mit den Calcinierabgasen in einem mit einem Aufsatz versehenen im wesentlichen vertikal angeordneten Venturiwäscher derart vorgenommen wird, daß
e) das heiße Calcinierabgas axial von oben nach unten durch ein in den Raum innerhalb des Aufsatzes hineinragendes Einführungsrohr in den Aufsatz eingeführt und dann durch den Venturiwäscher hindurchgeführt wird und die umlaufende Säure in zwei Anteilen derart in den Aufsatz und von da in den Venturiwäscher eingeführt wird, daß ein erster Anteil in gleicher Höhe wie das Calcinierabgas und im Gleichstrom damit in feinteiliger Form in den Raum innerhalb des Aufsatzes eingeführt und anschließend rasch mit dem Calcinierabgas vermischt wird und ein zweiter Anteil in Höhe der Einführung des ersten Anteils der umlaufenden Säure und des Calcinierabgases am gesamten Umfang über ein Wehr in den Aufsatz eingeführt und dann auf die Innenwand des Venturiwäschers aufgebracht, entlang dieser Innenwand zur Venturikehle geleitet und im wesentlichen erst im Bereich der Venturikehle mit dem Calcinierabgas vermischt wird, und daß
f) beide Anteile der umlaufenden Säure gemeinsam in einem unterhalb des Venturiwäschers angeordneten Fußgefäß aufgefangen und dort vom Calcinierabgas abgetrennt und die umlaufende Säure und das Calcinierabgas getrennt aus dem Fußgefäß abgezogen werden, wobei
g) so gearbeitet wird, daß im Säurekreislauf an der Stelle, an der ein Teil der umlaufenden Säure als vorkonzentrierte Säure abgezogen wird, ein H₂SO₄-Gehalt zwischen 25 und 28 Gew. % eingehalten wird.

2. Verfahren nach Anspruch 1, dadurch gekennzeichnet, daß der Säurekreislauf mittels einer Pumpvorrichtung aufrechterhalten wird und die Einführung der Dünnsäure auf der Saugseite dieser Pumpvorrichtung und der Abzug von umlaufender Säure als vorkonzentrierte Säure aus dem Säurekreislauf auf der Druckseite dieser Pumpvorrichtung vorgenommen wird.

3. Verfahren nach Anspruch 1 oder 2, dadurch gekennzeichnet, daß ein Gewichtsverhältnis von in einer bestimmten Zeit im Säurekreislauf umlaufender Säure zu in der gleichen Zeit in den Säurekreislauf eingeführter Dünnsäure von 10 bis 15 eingestellt wird.

4. Verfahren nach einem oder mehreren der Ansprüche 1 bis 3, dadurch gekennzeichnet, daß die Calcinierabgase mit einer Temperatur zwischen 250 und 400 °C in den Venturiwäscher eingeführt und mit einer Temperatur zwischen 85 und 100 °C aus dem Venturiwäscher abgezogen werden.

5. Verfahren nach einem oder mehreren der Ansprüche 1 bis 4, dadurch gekennzeichnet, daß die beiden Anteile der umlaufenden Säure in einem solchen Mengenverhältnis in den Venturiwäscher eingeführt werden, daß die Menge des ersten axial in den Venturiwäscher eingeführten Anteils das 0,6- bis 1-fache der Menge des zweiten über das Wehr auf die Innenwand des Venturiwäschers aufgebrachten Anteils beträgt.

6. Verfahren nach einem oder mehreren der Ansprüche 1 bis 5, dadurch gekennzeichnet, daß der zweite Anteil der umlaufenden Säure mit einer tangentialen Komponente über das Wehr auf die Innenwand des Venturiwäschers aufgebracht wird.

7. Verfahren nach einem oder mehreren der Ansprüche 1 bis 6, dadurch gekennzeichnet, daß das Calcinierabgas derart durch den Venturiwäscher hindurchgeführt wird, daß die mittlere Verweilzeit des Calcinierabgases im Venturiwäscher oberhalb der Venturikehle 0,2 bis 0,4 Sekunden und unterhalb der Venturikehle 0,3 bis 0,5 Sekunden beträgt.

8. Verwendung einer Vorrichtung für das Inkontaktbringen einer Säure mit einem heißen Gas, bestehend aus
a) einem im wesentlichen senkrecht angeordneten Venturiwäscher 1 mit einem oberen von oben nach unten sich verjüngenden Teil 4, einem unteren sich von oben nach unten erweiternden Teil 5 und einer diese beiden Teile verbindenden Venturikehle 6,
b) einem koaxial oberhalb des oberen Teils 4 des Venturiwäschers 1 angeordneten Aufsatz 2, wobei dessen Innenraum 25 mit dem Innenraum 26 des oberen Teils 4 des Venturiwäschers 1 in offener Verbindung steht und wobei in den Innenraum 25 des Aufsatzes 2 koaxial von oben ein Einführungsrohr 7 für ein heißes Gas hineinragt und in ihm mündet und innerhalb dieses Einführungsrohres 7 - in Richtung der Achse des Venturiwäschers 1 gesehen - in gleicher Höhe wie dieses Einführungsrohr 7 ein Mittel 8 für die Einführung eines ersten Anteils von Säure in feinteiliger Form in das heiße Gas mündet und wobei im Innenraum 25 des Aufsatzes 2 außerdem entlang des gesamten Umfangs ein Wehr 10 so angeordnet ist, daß es unmittelbar auf der oberen Kante 27 der Innenwand 24 des oberen Teils 4 des Venturiwäschers 1 aufsitzt und an seiner Innenwand mit ihr fluchtet, wobei die obere Kante 11 des Wehrs 10 - in Richtung der Achse des Venturiwäschers 1 gesehen - in gleicher Höhe wie die Einmündungen des Einführungsrohres 7 für heißes Gas und des Mittels 8 für die Einführung des ersten Anteils an Säure verläuft, wobei das Wehr 10 mit der Umfangswand 12 des Aufsatzes 2 einen Ringraum 13 bildet, in den durch diese Umfangswand 12 eine/ mehrere Zuführung(en) 14 für einen zweiten Anteil von Säure mündet bzw. münden, wobei außerdem das Mittel für die Einführung des ersten Anteils von Säure 8 und die Zuführung(en) für den zweiten Anteil von Säure 14 getrennt regelbar sind, ferner bestehend aus
c) einem Fußgefäß 3, welches unterhalb des unteren Teils 5 des Venturiwäschers 1 angeordnet ist, wobei der Innenraum 28 des Fußgefäßes 3 mit dem Innenraum 29 des unteren Teils 5 des Venturiwäschers 1 in offener Verbindung steht, wobei das Fußgefäß 3 mit getrennten Auslässen 16 für Gas und 18 für die Säure, die mit dem heißen Gas in Kontakt gebracht worden war, versehen ist, sowie bestehend aus
d) einer/mehreren Umlaufleitungen 19, die den Auslaß bzw. die Auslässe 18 für die Säure, die mit dem heißen Gas in Kontakt gebracht worden war, mit dem Mittel für die Einführung des ersten Anteils von Säure 8 und der/den Zuführung(en) für den zweiten Anteil von Säure 14 verbindet bzw. verbinden und mit einem Einlaß oder mehreren Einlässen 21 für frisch von außen zugeführte Säure und einem Auslaß bzw. mehreren Auslässen 22 für Säure, die mit dem heißen Gas in Kontakt gebracht worden war, versehen ist bzw. sind,
zur Vorkonzentrierung der bei der Titandioxidherstellung nach dem Sulfatverfahren anfallenden 20 bis 24 Gew. % H₂SO₄ enthaltenden Dünnsäure auf einen H₂SO₄-Gehalt von 25 bis 28 Gew. % unter Ausnutzung der Wärme der bei der Calcinierung des Titandioxidhydrats anfallenden heißen ungereinigten Calcinierabgase, wobei diese heißen ungereinigten Calcinierabgase in direkten Kontakt mit der in einem Säurekreislauf umlaufenden Säure gebracht und dabei abgekühlt werden und in diesen Säurekreislauf Dünnsäure eingeführt und aus dem Säurekreislauf ein Teil der umlaufenden Säure als vorkonzentrierte Säure abgezogen wird.

9. Verwendung nach Anspruch 8, wobei bei der verwendeten Vorrichtung in der Umlaufleitung 19 bzw. den Umlaufleitungen 19 eine/mehrere Pumpvorrichtung(en) 20 angeordnet ist/sind und mindestens ein Einlaß 21 saugseitig zur jeweiligen Pumpvorrichtung 20 und mindestens ein Auslaß 22 druckseitig zur jeweiligen Pumpvorrichtung 20 angeordnet ist, wobei Dünnsäure durch den Einlaß bzw. die Einlässe 21 in die Umlaufleitung(en) 19 eingeführt und ein Teil der umlaufenden Säure als vorkonzentrierte Säure aus dem Auslaß bzw. den Auslässen 22 aus der Umlaufleitung 19 bzw. den Umlaufleitungen 19 abgezogen wird.

10. Verwendung nach Anspruch 8 oder 9, wobei bei der verwendeten Vorrichtung das Fußgefäß 3 als Absetzbehälter und/oder Lösebehälter ausgestaltet und mit einer Deckplatte 15 versehen ist, durch die der untere Teil 5 des Venturiwäschers 1 in das Fußgefäß 3 mündet, wobei die Deckplatte 15 ferner außerhalb der Einmündung des unteren Teils 5 des Venturiwäschers 1 in das Fußgefäß 3 mit einem im wesentlichen nach oben gerichteten Auslaß für Gas 16 versehen ist, durch den das abgekühlte und von der umlaufenden Säure abgetrennte Calcinierabgas abgezogen wird, und wobei ferner das Fußgefäß 3 außerhalb der Deckplatte 15 mit einem Auslaß oder mehreren Auslässen 18 für die Säure, die mit dem heißen Gas in Kontakt gebracht worden war, versehen ist, durch den bzw. die die vom Calcinierabgas abgetrennte umlaufende Säure aus dem Fußgefäß 3 abgezogen wird, sowie gegebenenfalls mit mindestens einem weiteren Auslaß 23 versehen ist, durch den gegebenenfalls nicht in der umlaufenden Säure in Lösung gegangene Rückstände aus dem Fußgefäß 3 entfernt werden.

## Claims

1. Process for preconcentrating the dilute acid which arises when titanium dioxide is produced by the sulphate process, with utilisation of the heat of the hot exhaust gases from calcining which arise from the calcining of titanium dioxide hydrate, wherein
a) dilute acid, which contains from 20 to 24 wt-% H₂SO₄, is introduced into an acid circulation,
b) in the said acid circulation the acid circulating is directly contacted in a venturi scrubber with hot unpurified exhaust gases from calcining, wherein the exhaust gases from calcining are cooled and the H₂SO₄ content of the circulating acid is increased, and
c) some of the circulating acid is withdrawn from the acid circulation as preconcentrated acid, in a quantity such that the volume of the acid circulating in the acid circulation remains substantially constant,
characterised in that
d) the circulating acid is contacted with the exhaust gases from calcining in a substantially vertically disposed venturi scrubber provided with a top attachment in such a way that
e) the hot exhaust gas from calcining is introduced into the top attachment axially from above in a downward direction through a leading-in tube which protrudes into the space within the top attachment, and is then guided through the venturi scrubber, and the circulating acid is introduced in two portions into the top attachment and thence into the venturi scrubber in such a way that a first portion is introduced at the same height as the exhaust gas from calcining and in co-current therewith in finely-divided form into the space within the top attachment, and is then mixed rapidly with the exhaust gas from calcining, and a second portion is introduced into the top attachment at the height at which the first portion of the circulating acid and the exhaust gas from calcining are introduced, along the entire circumference over a weir, and is then applied to the internal wall of the venturi scrubber, is guided along the said internal wall to the venturi throat, and is substantially mixed with the exhaust gas from calcining only after reaching the region of the venturi throat, and in that
f) both portions of the circulating acid are captured together in a base vessel disposed below the venturi scrubber, and are there separated from the exhaust gas from calcining, and the circulating acid and the exhaust gas from calcining are drawn off separately from the base vessel, wherein
g) operation is such that a H₂SO₄ content of between 25 and 28 wt-% is maintained in the acid circulation at the point at which some of the circulating acid is drawn off as preconcentrated acid.

2. Process according to Claim 1, characterised in that the acid circulation is maintained by means of a pumping apparatus, and the dilute acid is introduced at the suction side of the said pumping apparatus and the circulating acid is drawn off from the acid circulation as preconcentrated acid at the pressure side of the said pumping apparatus.

3. Process according to Claim 1 or 2, characterised in that a weight ratio of acid circulating in the acid circulation within a predetermined period to dilute acid introduced into the acid circulation over the same period of from 10 to 15 : 1 is adjusted.

4. Process according to one or more of Claims 1 to 3, characterised in that the exhaust gases from calcining are introduced into the venturi scrubber at a temperature of between 250 and 400°C and are drawn off from the venturi scrubber at a temperature of between 85 and 100°C.

5. Process according to one or more of Claims 1 to 4, characterised in that both portions of the circulating acid are introduced into the venturi scrubber in a quantitative ratio such that the quantity of the first portion which is introduced axially into the venturi scrubber is from 0.6 to 1 times the quantity of the second portion which is applied via the weir to the internal wall of the venturi scrubber.

6. Process according to one or more of Claims 1 to 5, characterised in that the second portion of the circulating acid is applied with a tangential component to the internal wall of the venturi scrubber via the weir.

7. Process according to one or more of Claims 1 to 6, characterised in that the exhaust gas from calcining is guided through the venturi scrubber in such a way that the average residence time of the exhaust gas from calcining in the venturi scrubber is from 0.2 to 0.4 seconds above the venturi throat, and from 0.3 to 0.5 seconds below the venturi throat.

8. Use of an apparatus for contacting an acid with a hot gas comprising
a) a venturi scrubber 1 disposed substantially vertically having an upper part 4 which tapers in a downward direction, a lower part 5 which expands in a downward direction and a venturi throat 6 which connects the said two parts,
b) a top attachment 2 disposed coaxially above the upper part 4 of the venturi scrubber 1, wherein the internal space 25 thereof is connected in open manner to the internal space 26 of the upper part 4 of the venturi scrubber 1, and wherein a leading-in tube 7 for introduction of a hot gas protrudes into the internal space 25 of the top attachment 2 coaxially from above and opens thereinto, and within the said leading-in tube 7 - viewed in the direction of the axis of the venturi scrubber 1 - a means 8 for introducing a first portion of acid in finely-divided form into the hot gas opens up at the same height as the said leading-in tube 7, and wherein in the internal space 25 of the top attachment 2 a weir 10 is moreover disposed along the entire circumference so as to sit directly on the upper edge 27 of the internal wall 24 of the upper part 4 of the venturi scrubber 1 and to be aligned therewith at its internal wall, wherein the upper edge 11 of the weir 10 - viewed in the direction of the axis of the venturi scrubber 1 - runs at the same height as the openings of the leading-in tube 7 for hot gas and of the means 8 for the introduction of the first portion of acid, wherein the weir 10 forms, with the circumference wall 12 of the top attachment 2, an annular space 13 into which a feed line/a plurality of feed lines 14 for a second portion of acid opens or open through the said circumference wall 12, wherein moreover the means 8 for the introduction of the first portion of acid and the feed line(s) 14 for the second portion of acid are controllable separately, comprising further
c) a base vessel 3 which is disposed below the lower part 5 of the venturi scrubber 1, wherein the internal space 28 of the base vessel 3 is connected in open manner to the internal space 29 of the lower part 5 of the venturi scrubber 1, wherein the base vessel 3 is provided with separate outlets 16 for gas and 18 for the acid which has been contacted with the hot gas, and comprising
d) a circulation line/a plurality of circulation lines 19 which connects or connect the outlet or outlets 18 for the acid which has been contacted with the hot gas to the means 8 for the introduction of the first portion of acid, and to the feed line(s) 14 for the second portion of acid, and is/are provided with an inlet or a plurality of inlets 21 for acid freshly fed in from outside, and to an outlet or a plurality of outlets 22 for acid which has been contacted with the hot gas,
for preconcentrating to a H₂SO₄ content of from 25 to 28 wt-% the dilute acid containing from 20 to 24 25-% H₂SO₄ which arises when titanium dioxide is produced by the sulphate process, by utilising the heat of the hot unpurified exhaust gases from calcining which arise from the calcining of titanium dioxide hydrate, wherein the said hot unpurified exhaust gases from calcining are directly contacted with the acid circulating in an acid circulation and are thereby cooled, and dilute acid is introduced into the said acid circulation, and some of the circulating acid is drawn off from the acid circulation as preconcentrated acid.

9. Use according to Claim 8, wherein in the apparatus used a pumping apparatus/a plurality of pumping apparatuses 20 is/are disposed in the circulation line 19 or circulation lines 19, and there is disposed at least one inlet 21 on the suction side of each pumping apparatus 20 and at least one outlet 22 on the pressure side of each pumping apparatus 20, wherein dilute acid is introduced through the inlet or inlets 21 into the circulation line(s) 19 and some of the circulating acid is drawn off as preconcentrated acid from the outlet or outlets 22 from the circulation line 19 or circulating lines 19.

10. Use according to Claim 8 or 9, wherein in the apparatus used the base vessel 3 is constructed as a settling tank and/or dissolving tank and is provided with a cover plate 15 through which the lower part 5 of the venturi scrubber 1 opens into the base vessel 3, wherein the cover plate 15 is furthermore provided, exterior to the opening of the lower part 5 of the venturi scrubber 1 into the base vessel 3, with an outlet 16 for gas, which is substantially directed upwards, and through which the exhaust gas from calcining, cooled and separated from the circulating acid, is drawn off, and wherein furthermore the base vessel 3 is provided, exterior to the cover plate 15, with an outlet or a plurality of outlets 18 for the acid which has been contacted with the hot gas, through which outlet(s) the circulating acid separated from the exhaust gas from calcining is drawn off from the base vessel 3, and is provided optionally with at least one further outlet 23 through which residues optionally not passed into solution in the circulating acid are removed from the base vessel 3.

## Revendications

1. Procédé de préconcentration d'un acide dilué provenant de la préparation de dioxyde de titane selon le procédé au sulfate, avec utilisation de la chaleur des gaz chauds s'échappant de la calcination de l'hydrate de dioxyde de titane, procédé selon lequel :
(a) on introduit de l'acide dilué, qui contient 20 à 24 % en poids de H₂SO₄, dans un circuit d'acide,
(b) on met l'acide circulant dans ce circuit d'acide en contact direct, dans un laveur à Venturi, avec des gaz chauds, non purifiés, de calcination, ce qui refroidit les gaz provenant de la calcination et élève la teneur en H₂SO₄ de l'acide en circulation, et,
(c) on prélève sur le circuit d'acide une partie de l'acide en circulation, sous forme d'acide préconcentré, retiré en une quantité telle que le volume de l'acide en circulation dans le circuit d'acide reste essentiellement constant,
Procédé caractérisé en ce que :
(d) on effectue le contact de l'acide en circulation avec les gaz provenant de la calcination, dans un laveur à Venturi disposé essentiellement vertical et comportant un chapeau de garniture, de manière que
(e) le gaz chaud provenant de la calcination soit introduit axialement du haut vers le bas, dans le Chapeau de garniture, par un tube d'introduction pénétrant dans l'espace intérieur de ce chapeau de garniture, puis que ce gaz soit conduit de manière à traverser le laveur à Venturi, et l'acide en circulation est introduit en deux parties dans le chapeau de garniture et, de là, dans le laveur à Venturi, de manière qu'une première partie soit introduite à la même hauteur que le gaz provenant de la calcination et en cocourant avec ce gaz, sous forme finement répartie dans l'espace intérieur du chapeau de garniture, puis soit rapidement mélangé au gaz résiduaire de calcination et qu'une seconde partie soit introduite, à la hauteur de l'introduction de la première partie de l'acide en circulation et du gaz résiduaire de la calcination, sur la totalité de la périphérie, par l'intermédiaire d'un déversoir de trop-plein dans le chapeau de garniture puis soit appliquée sur la paroi intérieure du laveur à Venturi, soit acheminée le long de cette paroi intérieure vers la partie étroite du Venturi et que ce mélange avec du gaz provenant de la calcination ne se produise essentiellement que dans la zone de la partie étroite du Venturi, et en ce que
(f) les deux parties de l'acide en circulation sont reçues ensemble dans un récipient de pied disposé en dessous du laveur à Venturi et y sont séparés du gaz résiduaire de la calcination, et l'acide en circulation et le gaz résiduaire de la calcination sont séparément soutirés du récipient à pied et
(g) on travaille de manière que dans le circuit d'acide, à l'endroit où l'on soutire une partie de l'acide en circulation, à titre d'acide préconcentré, on maintient une teneur en H₂SO₄ comprise entre 25 et 28 % en poids.

2. Procédé selon la revendication 1, caractérisé en ce que le circuit d'acide est maintneu à l'aide d'un dispositif à pompe et l'on effectue I'introduction de l'acide dilué du côté aspiration de ce dispositif à pompe et le soutirage de l'acide en circulation, à titre d'acide préconcentré, est effectué sur le circuit d'acide du côté refoulement de ce dispositif à pompe.

3. Procédé selon la revendication 1 ou 2, caractérisé en ce qu'on applique un rapport pondéral de 10 à 15 entre l'acide circulant en un intervalle de temps déterminé dans le circuit d'acide et l'acide dilué introduit dans le même intervalle de temps dans le circuit d'acide.

4. Procédé selon une ou plusieurs des revendications 1 à 3, caractérisé en ce que les gaz résiduaires de la calcination sont introduits dans le laveur à Venturi à une température comprise entre 250 et 400° C et ils sont retirés du laveur à Venturi à une température comprise entre 85 et 100°C.

5. Procédé selon une ou plusieurs des revendications 1 à 4, caractérisé en ce que les deux parties de l'acide en circulation sont introduites dans le laveur à Venturi en un rapport entre quantités tel que la quantité de la première partie introduite axialement dans le laveur à Venturi représente 0,6 à 1 fois la quantité de la seconde partie appliquée par l'intermédiaire du déversoir de trop-plein sur la paroi intérieure du laveur à Venturi.

6. Procédé selon une ou plusieurs des revendications 1 à 5, caractérisé en ce que la seconde partie de l'acide en circulation est appliquée, avec une composante tangentielle, par l'intermédiaire du déversoir de trop-plein sur la paroi intérieure du laveur à Venturi.

7. Procédé selon une ou plusieurs des revendications 1 à 6, caractérisé en ce que le gaz résiduaire de la calcination est dirigé, dans sa traversée du laveur à Venturi, de manière que le temps moyen de séjour du gaz résiduaire de la calcination, dans le laveur à Venturi, soit de 0,2 à 0,4 seconde au-dessus de la partie étroite du Venturi et soit de 0,3 à 0,5 seconde au-dessous de la partie étroite du Venturi.

8. Utilisation d'un dispositif pour la mise en contact d'un acide avec un gaz chaud, ce dispositif consistant en :
(a) un laveur (1) à Venturi, disposé essentiellement à la verticale et comportant une partie supérieure (4) qui se rétrécit du haut vers le bas, une partie inférieure (5) qui s'élargit du haut vers le bas et une partie étroite (6) de Venturi reliant ces deux parties du laveur,
(b) un chapeau de garniture (2) disposé coaxialement au-dessus de la partie supérieure (4) du laveur (1) à Venturi, l'espace intérieur (25) de ce chapeau étant en liaison ouverte ou dégagée avec l'espace intérieur (26) de la partie supérieure (4) du laveur (1) à Venturi, et, un tube (7) d'introduction d'un gaz chaud pénètre dans l'espace intérieur (2() du chapeau (2), coaxialement depuis le haut et y débouche et, à l'intérieur de ce tube (7) l'introduction - quand on regarde dans la direction de l'axe du laveur (1) à Venturi - débouche, à la même hauteur que ce tube (7) d'introduction, un moyen (8) pour l'introduction d'une première partie d'acide, sous forme de fines particules, dans le gaz chaud et , dans l'espace intérieur (25) du chapeau (2), en outre, le long de la totalité de la périphérie, est disposé un déversoir (10) de trop-plein de manière qu'il repose immédiatement sur le bord supérieur (27) de la paroi intérieure (24) de la partie supérieure (4) du laveur à Venturi (1) et affleure à sa paroi intérieure, le bord supérieur (11) du déversoir (10) de trop-plein vu dans le sens du laveur à Venturi (1) étant situé à la même hauteur que les débouchés du tube (7) d'introduction des gaz chauds et du moyen (8) pour l'introduction de la première partie d'acide, le déversoir (10) de trop-plein formant, avec la paroi périphérique (13) du chapeau (2), un espace annulaire (13) dans lequel une ou plusieurs amenées (14) d'une seconde partie d'acide débouche(nt) par l'intermédiaire de cette paroi périphérique (12), le moyen (8) pour l'introduction de la première partie d'acide et la ou les amenées (14) de la seconde partie d'acide étant en outre réglables séparément, le dispositif consistant en outre en
(c) un récipient (3) de base ou de pied, qui est disposé au-dessous de la partie inférieure (5) du laveur (1) à Venturi, l'espace intérieure (28) du récipient de pied (3) communiquant librement avec l'espace intérieur (29) de la partie inférieure (5) du laveur (1) à Venturi, le récipient (3) de base ou de pied comportant des sorties séparées, (16) pour le gaz et (18) pour l'acide, qui a été mis en contact avec le gaz chaud , le dispositif consitant également en
(d) un ou plusieurs conduits (19) de circulation reliant la ou les sortie(s) (18) de l'acide, qui a été mis en contact avec du gaz chaud, avec le moyen (8) pour l'introduction de la première partie d'acide et avec la ou les amenées (14) de la seconde partie d'acide, et comportant une admission ou plusieurs admissions (21) pour de l'acide frais acheminé de l'extérieur et une sortie ou plusieurs sorties (22) pour l'acide, qui a été mis en contact avec le gaz chaud,
pour la préconcentration de l'acide dilué, contenant de 20 à 24 % en poids de H₂SO₄ et provenant de la production de dioxyde de titane selon le procédé au sulfate, pour amener cette teneur en H₂SO₄ à une valeur de 25 à 28 % en poids avec utilisation de la chaleur des gaz chauds et non purifés résiduaires de la calcination de l'hydrate de dioxyde de titane, ces gaz chauds et non purifiés de calcination étant mis en contact direct avec l'acide circulant dans un circuit fermé d'acide et ces gaz étant ainsi refroidis, et de l'acide dilué étant introduit dans ce circuit d'acide circulant en circuit fermé, et une partie de l'acide en circulatiuon étant prélevée, à titre d'acide préconcentré, sur le circuit fermé d'acide.

9. Utilisation selon la revendication 8, selon laquelle, dans le dispositif utilisé pour le conduit (19) de circuit fermé ou de recyclage ou dans les conduits (19) de circuit fermé ou de recyclage est ou sont disposés un ou plusieurs dispositifs (20) à pompe et au moins une admission (21) est disposée du côté aspiration de chaque dispositif (20) à pompe et au moins une sortie (22) est disposée du côté refoulement de chaque dispositif (20) à pompe, l'acide dilué étant introduit, par l'admission ou par les admissions (21) dans le ou les conduits (19) de recyclage , et une partie de l'acide en circulation dans le circuit de recyclage étant prélevée, à titre d'acide préconcentré, de la sortie ou des sorties (22) du conduit (19) de recyclage ou des conduits (19) de recyclage.

10. Utilisation selon la revendication 8 ou 9, selon laquelle, dans le dispositif utilisé, le récipient (3) de base ou de pied a la forme d'un récipient de dépôt de sédimentation et/ou d'un récipient de séparation, et comporte une plaque (15) de couverture, par l'intermédiaire de laquelle la partie inférieure (5) du laveur (1) à Venturi, débouche dans le récipient (3), la plaque (15) de couverture comportant, en plus du débouché de la partie inférieure (5) du laveur (1) à Venturi dans le récipient (3) une sortie (16) pour le gaz, dirigée essentiellement vers le haut et par laquelle est retiré le gaz provenant de la calcination, refroidi et séparé de l'acide en circulation, et le récipient de base ou de pied (3) comportant, en plus de la plaque (15) de couverture, une ou plusieurs sorties (18) pour l'acide qui a été mis en contact avec du gaz chaud, sortie(s) par l'intermédiaire de laquelle ou desquelles l'acide en circulation, séparé du gaz résiduaire de la calcination, est soutiré du récipient (3) de base, et comportant éventuellement au moins une autre sortie (23) par laquelle les résidus, qui ne sont éventuellement pas passés en solution dans l'acide en circulation, sont retirés du récipient (3) de base.
